# FASCICULE DE BREVET EUROPEEN

(11) **EP 3 802 416 B1**
(45) Date de publication et mention de la délivrance du brevet: **05.07.2023**
(21) Numéro de dépôt: 19740634.1
(22) Date de dépôt: 29.05.2019
(51) Int. Cl.: C01B 21/087, B01J 2/02, C06B 21/00, C06B 31/00

(54) **PROCEDE D'OBTENTION DE CRISTAUX DE DINITROAMIDURE D'AMMONIUM (ADN); CRISTAUX D'ADN ET LES COMPOSITES ENERGETIQUES EN CONTENANT**
VERFAHREN ZUR HERSTELLUNG VON AMMONIUMDINITRAMID (ADN)-KRISTALLEN, ADN-KRISTALLE UND ENERGETISCHE VERBUNDSTOFFE DAMIT
METHOD FOR PRODUCING AMMONIUM DINITRAMIDE (ADN) CRYSTALS, ADN CRYSTALS AND ENERGETIC COMPOSITES CONTAINING SAME

(30) Priorité: 30.05.2018 FR 1800529
(43) Date de publication de la demande: 14.04.2021
(73) Titulaire: ArianeGroup SAS, 78130 Les Mureaux (FR); Eurenco, 91300 Massy (FR)
(72) Inventeur: MAZUBERT, Alex, 91610 Ballancourt - sur - Essonne (FR)
(74) Mandataire: Cabinet Beau de Loménie
(86) Numéro de dépôt international: PCT/FR2019/051268
(87) Numéro de publication internationale: WO 2019/229385

(56) Documents cités:
- EP-A1- 0 953 555
- EP-B1- 1 868 940
- EP-B1- 2 323 962
- WO-A1-99/01408
- WO-A2-2013/093419

## Description

La présente invention a pour objet un procédé d'obtention de cristaux de dinitroamidure d'ammonium (plus communément appelé « ammonium dinitramide » et connu sous la dénomination « ADN » (Ammonium DiNitramide)).

A l'issue de sa synthèse, l'ADN, obtenu en solution, est cristallisé par des méthodes conventionnelles (souvent par concentration, par addition d'un non solvant et/ou par refroidissement, généralement par refroidissement (méthode la plus simple à mettre en oeuvre)). Ces méthodes de cristallisation conventionnelles (mises en oeuvre avec des solutions refermant des solvants de nature différente) génèrent, en des proportions plus ou moins importantes, des cristaux présentant une morphologie impropre à leur formulation : des cristaux de type plaque, bâtonnet, voire aiguille. La faisabilité de composites énergétiques renfermant de tels cristaux est fortement compromise du fait de la forte augmentation de viscosité dès que l'on vise des taux de charge conséquents. De tels taux de charge conséquents sont requis pour l'obtention de composites énergétiques performants (au regard notamment de leur vitesse de combustion) et dont l'exposant de pression est maîtrisé.

Selon l'art antérieur, on a proposé différentes approches pour l'obtention de cristaux présentant une morphologie plus adaptée à leur formulation. On a proposé de modifier le procédé d'obtention desdits cristaux ou de modifier lesdits cristaux après leur obtention. On a proposé et développé la technologie dite du « prilling ». Selon ladite technologie, on préconise de reconditionner les cristaux d'ADN sous la forme de granulés sphériques, appelés « prills ». Lesdits « prills » sont obtenus, soit en fondant l'ADN sous vive agitation dans un liquide non solvant et en refroidissant ensuite rapidement, soit en utilisant une tour de « prilling », tour au sein de laquelle l'ADN fondu est pulvérisé dans un courant gazeux. Aucune de ces deux variantes - la première, qualifiée de « prilling en suspension » ou encore de cristallisation en voie fondue, est notamment décrite dans la demande WO-A-99/21794, la seconde dans les demandes WO-A-97/47571 et WO-A-99/01408 - n'est pleinement satisfaisante. La seconde implique la manipulation d'ADN fondu, opération relativement délicate à maitriser au vu de la stabilité limitée de l'ADN à l'état liquide, de son point de fusion élevé et de sa sensibilité à haute température. La première est difficile à extrapoler au-delà de quelques kilogrammes par lot (« par batch »), dans la mesure où il est difficile d'assurer le refroidissement rapide requis (d'autant plus difficile que le volume du réacteur est important). En tout état de cause, les « prills » d'ADN obtenus, selon ladite première variante, sont pollués par le liquide non solvant (par exemple de type : polymère (tel PBHT (PolyButadiène HydroxyTéléchélique)) + plastifiant (tel DOS (dioctyl sebacate) ou DOZ (dioctyl azélate)) et doivent subir plusieurs cycles de lavage/filtration.On a préconisé l'intervention aval de modificateurs du facies cristallin (d'additifs de cristallisation). Ceci a notamment été décrit dans la demande WO 2006/10899. Le procédé en cause, original et performant, s'est révélé difficile à transposer à l'échelle industrielle. La quantité efficace de modificateur du faciès cristallin pollue les cristaux obtenus.

On a aussi décrit, dans la demande WO 2010/10899, l'obtention de cristaux d'ADN en milieu visqueux, plus particuliérement en milieu 1,4-butanediol/glycérol. Ce procédé est intéressant mais il présente des limites (faible rendement de cristallisation, influence du nitrate d'ammonium (impureté) contenu dans l'ADN, lavages requis en fin de cristallisation, et granulométrie moyenne obtenue « constante »).

On a proposé plus récemment la technologie de la cristallisation par émulsion (mise en oeuvre avec utilisation d'une membrane). La demande WO 2013/093419 illustre la mise en oeuvre de cette technologie avec une solution aqueuse d'ADN. Ladite solution aqueuse est forçée, par une pompe, à traverser une membrane, pour se trouver, dispersée, dans un non solvant de l'ADN. Une émulsion de gouttelettes de solution aqueuse d'ADN est ainsi générée dans le non solvant (du fait de la non miscibilié de l'eau et dudit non solvant). La taille des gouttellettes de ladite émulsion est relativement uniforme. Elle est liée à celle des pores de la membrane. L'évaporation de l'eau (des gouttelettes) permet ensuite de cristalliser l'ADN sous forme de billes. On comprend que lesdites billes présentent des tailles relativement similaires, liées à la taille des pores de la membrane. Dans un tout autre domaine technique, celui de la pharmacie, on a décrit, dès 1988 (voir le brevet US 4 726 966), une méthode pour produire des microsphères d'ibuprofène. Ladite méthode, qualifiée de « quasi-emulsion solvent diffusion method », permet la mise en forme et l'enrobage dudit ibuprofène. Ladite méthode est à la base de celle décrite dans la demande WO 99/20254.

Il est du mérite des inventeurs de s'être intéressés à cette méthode du domaine pharmaceutique et d'avoir montré qu'il est possible de la mettre en oeuvre pour l'obtention de cristaux d'ADN (la possibilité de générer une quasi-émulsion au sens du brevet US 4 726 966 (émulsion éphémère (voir ci-après)) avec de l'ADN en solution n'était nullement acquise par avance) ; lesdits cristaux (non enrobés) présentant une morphologie intéressante (pour leur formulation à des taux conséquents). Ceci est illustré par les exemples et figures ci-après.

Par ailleurs, ladite méthode offre des leviers d'action sur la granulométrie des cristaux générés : tout particulièrement, la différence des températures de la solution d'ADN (S : voir ci-après) et du non solvant (S2, éventuellement additionné d'au moins un tensio-actif : voir ci-après) (voir ci-après, les exemples 1 et 2 (différence des températures de 52°C), d'une part et l'exemple 3 (différence des températures de 30°C : plus gros cristaux), d'autre part ainsi que l'exemple 6 (différence des températures de 30°C), d'une part et l'exemple 7 (différence des températures de 45°C : plus petits cristaux), d'autre part), et la différence des concentrations en ADN initiale (dans S : voir ci-après) et finale (dans S + S2 éventuellement additionné d'au moins un tensio-actif : voir ci-après) (voir ci-après, l'exemple 3 (différence des concentrations de 31,5 %), d'une part et l'exemple 4 (différence des concentrations de 41,7 % : plus petits cristaux), d'autre part ainsi que l'exemple 4 (différence des concentrations de 41,7 %), d'une part et l'exemple 5 (différence des concentrations de 23 % : plus gros cristaux), d'autre part).

Les inventeurs proposent donc un procédé original d'obtention (de génération ou préparation) de cristaux d'ADN ; ledit procédé reposant sur la génération d'une émulsion éphémère (« quasi-émulsion », de type eau dans huile) par mise en contact d'une solution renfermant de l'ADN dans un solvant de l'ADN avec un non solvant de l'ADN, lesdits solvant et non solvant étant miscibles. Les cristaux générés, « suite à cette simple mise en contact », présentent une morphologie intéressante. Il s'agit de cristaux arrondis pouvant être formulés, à des taux conséquents, pour la fabrication de composites énergétiques.

Ledit procédé original d'obtention (de génération ou préparation) de cristaux d'ADN comprend :
- la mise à disposition, à une température (TS) comprise entre la température ambiante et 65°C, d'une solution d'ADN (S) dans un solvant polaire (S1) de l'ADN ; ladite solution d'ADN (S), constituée essentiellement dudit ADN, dudit solvant polaire (S1) de l'ADN et éventuellement d'au moins un tensio-actif non ionique, renfermant l'ADN en un rapport massique, ADN/solvant polaire (S1) de l'ADN, d'au moins 15 % ;
- la mise à disposition, à une température (TS2) inférieure à ladite température (TS) de ladite solution d'ADN (S), d'un solvant apolaire (S2) non solvant de l'ADN, miscible avec ledit solvant polaire (S1) solvant de l'ADN et éventuellement additionné d'au moins un tensio-actif non ionique ;
- l'addition, avec agitation, d'au moins une partie de ladite solution d'ADN (S) dans au moins une partie dudit solvant apolaire (S2) éventuellement additionné d'au moins un tensio-actif non ionique, ladite au moins une partie de ladite solution d'ADN (S) étant additionnée, à ladite au moins une partie dudit solvant apolaire (S2) éventuellement additionné d'au moins un tensio-actif non ionique, au maximum en une quantité correspondant à un rapport massique du solvant polaire (S1)/(solvant polaire (S1) + solvant apolaire (S2)) de 25 %,
   étant avantageusement additionnée en une quantité correspondant à un tel rapport massique de 8 à 23 %,
   étant très avantageusement additionnée en une quantité correspondant à un tel rapport massique de 9 à 17 %,
   pour la constitution d'une émulsion éphémère de gouttelettes de ladite solution d'ADN (S) dans ledit solvant apolaire (S2) éventuellement additionné d'au moins un tensio-actif non ionique ; lesdites gouttelettes, de par l'inter-diffusion des solvants polaire et apolaire (S1 et S2) miscibles, se transformant en les cristaux d'ADN attendus ;
   ledit au moins un tensio-actif non ionique étant présent dans ladite solution d'ADN (S) et/ou ayant été additionné dans ledit solvant apolaire (S2), étant avantageusement présent dans ladite solution d'ADN (S), en une quantité efficace pour la contitution de ladite émulsion éphémère ;
      - la récupération desdits cristaux, et généralement
      - le séchage desdits cristaux récupérés.

Les sigles utilisés ne sont pas des références à des figures mais de simples sigles pour identifier rapidement et aisément les produits et paramètres en cause. Ils sont là pour une lecture plus aisée et une compréhension plus rapide du présent texte et n'introduise aucune limitation.

L'homme du métier a d'ores et déjà compris que l'émulsion générée dans le cadre du procédé de l'invention n'est pas une émulsion au sens de de la demande WO 2013/093419. Ladite émulsion générée dans le cadre du procédé de l'invention n'est qu'éphémère du fait de la miscibilité des solvants - solvant de l'ADN (S1) et non solvant de l'ADN (S2) - utilisés. En effet, du fait de cette miscibilité, le solvant (des gouttellettes) diffuse dans le non solvant (et vice-versa) et la solubilité de l'ADN dans les gouttelettes, renfermant de moins en moins de solvant et de plus en plus de non solvant, diminue progressivement, déclenchant alors la cristallisation dudit ADN. On note que dans un tel procédé, il n'est pas requis d'énergie pour éliminer le solvant, il n'est pas requis d'éliminer le solvant. Tout repose sur l'inter-diffusion des solvants.

On a parlé d'un solvant polaire (S1) de l'ADN et d'un solvant apolaire (S2) non solvant de l'ADN. Les « un » se lisent « au moins un » dans la mesure où les solvants en cause peuvent être constitués d'un (unique) solvant ou d'un mélange d'au moins deux solvants (évidemment miscibles).

En référence à chacune des étapes du procédé ci-dessus, on se propose de donner ci-après, de façon nullement limitative, des précisions.

Pour la génération et la récupération d'ADN sous la forme de cristaux présentant une morphologie intéressante (et une granulométrie « contrôlée »), le procédé de l'invention utilise, comme source d'ADN, une solution renfermant de l'ADN (S) dans un solvant de l'ADN. Un tel solvant, au vu du composé en cause - l'ADN - est un solvant polaire. Par solvant de l'ADN, on entend présentement un solvant qui dissout au moins 10 g d'ADN/100 g de solvant à 20°C. Ladite solution d'ADN (S) a très généralement été préparée, en amont, à partir d'ADN solide (tels des cristaux présentant une morphologie et/ou une granulométrie à modifier) ; sa préparation comprenant la dissolution dudit ADN solide dans le solvant polaire (S1). Il n'est toutefois pas exclu que ladite solution d'ADN (S) ait une autre origine. Par exemple, elle peut consister en un milieu de synthèse de l'ADN ayant avantageusement été purifié, ou être obtenue à partir d'un tel milieu de synthèse de l'ADN ayant avantageusement été purifié. Ladite solution d'ADN (S) renfermant l'ADN dans le solvant polaire (S1) est par ailleurs susceptible de renfermer au moins un tensio-actif non ionique. On revient plus avant dans le présent texte sur cet auxiliaire de fabrication, utile à la constitution de l'émulsion éphémère.

La solution d'ADN (S) utilisée comme source d'ADN consiste donc essentiellement en ledit ADN, en ledit solvant polaire S1 dudit ADN et éventuellement en au moins un tensio-actif non ionique. Le terme « essentiellement » prévoit l'éventuelle présence, à un taux très faible (< 1 % en masse (/S)) d'au moins un additif. Le terme « additif » se lit ici de façon conventionnelle mais il englobe aussi d'éventuelles impuretés présentes (du nitrate d'ammonium peut ainsi être présent, aux faibles taux indiqués, comme impureté et/ou additif conventionnel). La présence d'un tel au moins additif n'est en aucune façon obligatoire, elle est *a priori* guère opportune, en référence notamment à la pureté des cristaux recherchés mais elle ne saurait donc être totalement exclue (à la condition expresse, bien évidemment, qu'elle n'influe pas, de façon négative, sur le résultat recherché). De préférence, la solution d'ADN (S) utilisée comme source d'ADN consiste en ledit ADN, en ledit solvant polaire S1 dudit ADN et éventuellement en ledit au moins un tensio-actif non ionique. De façon particulièrement préférée, elle consiste en ledit ADN, en ledit solvant polaire S1 dudit ADN et en au moins un (avantageusement un) tensio-actif non ionique présent en quantité efficace (voir ci-après).

Ladite solution d'ADN (S) renferme ledit ADN en un rapport massique, ADN/solvant polaire (S1), d'au moins 15 %. La mise en œuvre du procédé de l'invention avec des teneurs plus faibles présente *a priori* un intérêt moindre et en tout état de cause, elle conduit à des cristaux dont la morphologie n'est pas satisfaisante (voir ci-après l'exemple comparatif C3 et la figure C3A associée). La mise en œuvre du procédé de l'invention avec des teneurs plus fortes est préconisée (pour logiquement la récupération d'une quantité plus importante de cristaux). Il convient toutefois, bien évidemment, dans la mesure où une solution est concernée, de ne pas dépasser la saturation (à la température en cause). Il est ainsi préconisé de mettre en œuvre le procédé de l'invention avec une solution d'ADN (S) (quasi)saturée en ADN (solution renfermant le maximum d'ADN en solution). On comprend bien évidemment que les conditions d'une telle (quasi)saturation dépendent de la nature du solvant de l'ADN (S1) en cause et de la température (TS) de la solution d'ADN (S) renfermant ledit ADN, ledit solvant de l'ADN (S1) en cause ainsi qu'éventuellement ledit au moins un tensio-actif.

Pour ce qui concerne la température (TS) de la solution d'ADN (S) mise à disposition, elle est, comme indiqué ci-dessus, comprise entre la température ambiante (T_{ambiante}, généralement 18°C ≤ T_{ambiante} ≤ 25°C) et 65°C : T_{ambiante} ≤ TS ≤ 65°C. Il n'y a aucun intérêt à disposer d'une solution S en-deçà de la température ambiante. Un refroidissement demande de l'énergie et ne manquerait pas de générer des problèmes en référence à la température (TS2) du non solvant (S2) ainsi qu'avec la condensation d'eau. Pour ce qui concerne la limite supérieure de 65°C, elle est requise en référence à la possible évaporation de S1 (à éviter, en tout état de cause à minimiser) ainsi qu'en référence à la température (TS2) du non solvant (S2). On a généralement ladite température (TS) de la solution d'ADN (S) entre 20 et 65°C (20°C ≤ TS ≤ 65°C ).

On en vient maintenant à la description du « partenaire » de la solution d'ADN (S) : le solvant apolaire (S2) non solvant de l'ADN, éventuellement additionné d'au moins un tensio-actif non ionique. On a en effet compris que la génération des cristaux, dans le cadre du procédé de l'invention, repose conventionnellement sur une action solvant/non solvant qui génère une émulsion, action toutefois originale en ce que ladite émulsion est éphémère dans la mesure où ledit non solvant (S2) est miscible avec ledit solvant (S1) ; une telle miscibilité impliquant une inter-diffusion desdits solvant/non solvant (mis en présence).

Pour la mise en oeuvre du procédé de l'invention, il convient donc de disposer aussi d'un solvant apolaire (S2) non solvant de l'ADN. Ledit solvant apolaire (S2) a été et est, dans le présent texte, par commodité, souvent qualifié simplement de « non solvant (S2) ». Il est apolaire dans la mesure où il est non solvant de l'ADN. Par non solvant de l'ADN, on entend présentement un solvant qui dissout au maximum 0,003 g d'ADN/100 g de solvant à 20°C.

De façon caractéristique, ledit solvant apolaire (S2) non solvant de l'ADN (ledit non solvant (S2)) est miscible avec le solvant polaire (S1) solvant de l'ADN (base de la solution d'ADN (S) décrite ci-dessus). La miscibilité des deux solvants, solvant de l'ADN (S1) d'une part et non solvant de l'ADN (S2) d'autre part, est une miscibilité au sens conventionnel. Le mélange des deux solvants (dans les conditions de mise en oeuvre du procédé de l'invention) génère une unique phase.

Ledit solvant apolaire (S2) non solvant de l'ADN est susceptible d'avoir été additionné, i.e. de renfermer, au moins un tensio-actif non ionique. Le mélange « solvant apolaire (S2) + au moins un tensio-actif non ionique » ne constitue *a priori* pas une solution. On revient plus avant dans le présent texte sur ledit au moins un tensio-actif non ionique, auxiliaire de fabrication, utile à la constitution de l'émulsion éphémère. On peut d'ores et déjà indiquer ici que ledit au moins un tensio-actif non ionique est nécessaire à la formation de l'émulsion éphémère, i.e. qu'il est présent, dans ladite solution d'ADN (S) et/ou qu'il a été additionné dans ledit non solvant (S2), en quantité efficace. Toutes les variantes sont possibles : un unique tensio-actif présent dans ladite solution d'ADN (S) et/ou additionné audit non solvant (S2), au moins deux tensio-actifs présents dans ladite solution d'ADN (S) et/ou additionnés audit non solvant (S2). Préférentiellement, un unique tel tensio-actif est présent dans la solution d'ADN (S) en quantité efficace.

La présence d'additif(s) dans S2 apparait en aucune façon nécessaire, en aucune façon opportune (en référence notamment à la pureté des cristaux recherchés). Un(des) tel(s) additif(s) n'est(ne sont) *a priori* pas présent(s). On comprend toutefois qu'une telle présence (à des taux très faibles (< 1 % en masse (/S2))) ne saurait être totalement exclue, à la condition expresse qu'elle n'influe pas, de façon négative, sur le résultat recherché.

Pour ce qui concerne la température (TS2) du solvant apolaire (S2) non solvant de l'ADN mis à disposition (éventuellement additionné d'au moins un tensio-actif non ionique), elle est, comme indiqué ci-dessus, inférieure à la température (TS) de la solution d'ADN (S) (logiquement, dans la mesure où la génération ultérieure des cristaux est visée). Elle est opportunément d'au minimum 0°C. Un refroidissement en deçà de la température ambiante (d'une mise en oeuvre « lourde ») ne présente *a priori* pas d'intérêt particulier. L'utilisation de S2 (éventuellement additionné d'au moins un tensio-actif non ionique) à la température ambiante est préconisée. En fait, la valeur maximale de ladite température (TS2) du non solvant (S2) (éventuellement additionné d'au moins un tensio-actif non ionique) est opportunément inférieure d'au moins 20°C à la valeur de la température (TS) de la solution S (TS). En fait, il est avantageux que la température (TS2) du solvant apolaire (S2) (éventuellement additionné d'au moins un tensio-actif non ionique) soit inférieure, de 20 à 50°C, à la température (TS) de la solution d'ADN (S) ; il est très avantageux que ladite température (TS2) du solvant apolaire (S2) (éventuellement additionné d'au moins un tensio-actif non ionique) soit inférieure, de 15 à 45°C, à la température (TS) de la solution d'ADN (S). Les écarts de températures (« TS-TS2 »), (dans ce sens évidemment et) avec des amplitudes telles que préconisées ci-dessus, sont un levier d'action sur la granulométrie des cristaux préparés (voir ci-après l'exemple 3/exemples 1 et 2 ainsi que l'exemple 6/l'exemple 7). Les inventeurs ont mis en évidence que plus ledit écart des températures est important, plus la granulométrie des cristaux obtenue est faible. Le procédé de l'invention est donc particulièrement intéressant en ce qu'il permet, par ses conditions exactes de mise en oeuvre, de « contrôler » la granulométrie des cristaux préparés.

On en vient maintenant à la génération des cristaux, plus exactement dans un premier temps à la génération de l'émulsion éphémère (gouttelettes de S dans S2 (éventuellement additionné d'au moins un tensio-actif non ionique) ; émulsion de type eau (S, S1) dans huile (« S2 »)), puis dans un second temps à la génération *per se* des cristaux de par l'inter-diffusion des solvant/non solvant.

Ladite génération de l'émulsion éphémère résulte de la mise en contact (d'au moins une partie) de la solution d'ADN (S) et (d'au moins une partie) du non solvant (S2) éventuellement additionné d'au moins un tensio-actif non ionique ; elle résulte plus précisément de l'addition, avec agitation, (d'au moins une partie) de la solution d'ADN (S) dans (au moins une partie) du non solvant (S2) éventuellement additionné d'au moins un tensio-actif non ionique. On a compris qu'il convient évidemment que S soit ajoutée dans S2 (et non l'inverse) pour la génération de l'émulsion éphémère escomptée et celle, ensuite, des cristaux. Une telle addition, en référence au but recherché (la génération d'une émulsion), est évidemment mise en oeuvre avec agitation et avantageusement de façon progressive. Pour ce qui concerne l'intensité de l'agitation, l'homme du métier est à même de l'optimiser, en référence au résultat recherché : la génération d'une émulsion. Selon une variante préférée de mise en oeuvre, pour la mise en contact (l'addition), on procède par coulée : (au moins une partie de) S est coulé(e) sur (au moins une partie de) S2 éventuellement additionné d'au moins un tensio-actif non ionique.

De façon caractéristique, pour l'obtention du bon résultat escompté en terme de morphologie des cristaux générés principalement, mais ausi de rendement, il convient de mettre en oeuvre la mise en contact (l'addition) en respectant la condition formulée ci-dessus et rappelée ci-après. A l'issue de ladite mise en contact (de ladite addition), la quantité relative des solvant (de l'ADN) (S1) et non solvant (de l'ADN) (S2), exprimée en rapport massique (S1/(S1+S2)), doit être au maximum de 25 %, avantageusement elle est comprise entre 8 et 23 %, très avantageusement entre 9 et 17 % (les bornes des plages indiquées font partie desdites plages). La criticité des valeurs dudit rapport massique (S1/(S1+S2)) est montrée dans les exemples ci-après (voir tout particulièrement les exemples comparatifs C1 et C2 et les figures associées).

On rappelle opportunément ici que le procédé de l'invention, tel que décrit ci-dessus, est particulièrement performant, en ce que, non seulement, il propose une solution satisfaisante au problème technique de l'obtention de cristaux d'ADN présentant une morphologie intéressante (cristaux arrondis) mais en ce qu'il permet, en outre, de contrôler la granulométrie des cristaux obtenus *via* les deux paramètres (de mise en oeuvre dudit procédé) identifiés ci-dessus : 1) la différence des températures de la solution d'ADN et du non solvant éventuellement additionné d'au moins un tensio-actif et 2) la différence des concentrations en ADN initiale et finale. Plus lesdites différences sont importantes, plus la granulométrie des cristaux d'ADN obtenus est faible.

Suite à l'addition de la solution d'ADN (S) dans le non solvant (S2) éventuellement additionné d'au moins un tensio-actif non ionique et à la constitution de l'émulsion qui en résulte, les cristaux d'ADN se forment, du fait de l'inter-diffusion des solvant/non solvant (ce qui fait disparaitre ladite émulsion). L'apparition des cristaux n'est donc pas instantanée. Il est préconisé, après l'addition, un maintien au contact de la solution d'ADN (S) et du non solvant (S2) éventuellement additionné d'au moins un tensio-actif non ionique de plusieurs minutes, généralement de 5 à 30 min.

Les cristaux formés peuvent ensuite être récupérés. Ils sont généralement récupérés par filtration.

Les cristaux récupérés sont ensuite généralement séchés. Il n'est pas nécessaire de leur faire subir plusieurs cycles de lavage/filtration. Les solvant S1 et non solvant S2 s'éliminent aisément (beaucoup plus aisément que les polymères et plastifiants utilisés pour l'obtention de « prills » avec fusion de l'ADN (voir ci-dessus)). Seules des traces (minimes) du au moins un tensio-actif utilisé se retrouvent sur les cristaux. De telles traces constituent une signature originale du procédé d'ontention desdits cristaux (voir ci-après).

On se propose maintenant de revenir sur le au moins un tensio-actif non ionique présent dans ladite solution d'ADN (S) et/ou ayant été additionné dans ledit solvant apolaire (S2) non solvant de l'ADN. De par sa nature et sa quantité efficace d'intervention (à déterminer au cas par cas, compte tenu tout particulièrement de la nature des solvants mis en présence (S1 et de S2) et des températures (TS et TS2) ; l'intensité de l'agitation constituant un autre paramètre), il permet la constitution de l'émulsion au demeurant éphémère. Ledit au moins un tensio-actif non ionique est, selon une variante avantageuse (tout particulièrement dans un contexte où S1 = l'éthanol et S2 = le dichlorométhane), un tensio-actif non ionique présentant une balance hydrophile/hydrophobe inférieure à 6 (HLB < 6). Il peut notamment avantageusement consister en le monostéarate de sorbitane (E 491).

Selon un mode de mise en oeuvre préféré du procédé de l'invention, ledit au moins un tensio-actif non ionique est présent dans ladite solution d'ADN (S) en un rapport massique, dudit au moins un tensio-actif/solvant polaire (S1), de 0,05 à 5 %, avantageusement de 0,06 à 3 %, très avantageusement de 0,08 à 2 %.

Selon un mode de mise en oeuvre particulièrement préféré du procédé de l'invention, le au moins un tensio-actif non ionique présente une balance hydrophile/hydrophobe inférieure à 6 (HLB < 6) et il est présent dans la solution d'ADN (S), en un rapport massique, dudit au moins un tensio-actif/solvant polaire (S1), de 0,05 à 5 %, avantageusement de 0,06 à 3 %, très avantageusement de 0,08 à 2 %.

Pour ce qui concerne les solvant (S1) et non solvant (S2), on peut ajouter, de façon nullement limitative, ce qui suit. Ils sont évidemment, chacun, choisi en référence à un cahier des charges, dont on a déjà compris les stipulations.

Le solvant de l'ADN (S1) (solvant ou mélange d'au moins deux solvants (miscibles)) est comme précisé ci-dessus : polaire, solvant de l'ADN aux températures indiquées, miscible avec le non solvant (S2). Il est avantageusement choisi parmi l'éthanol, les propanols et leurs mélanges. Il consiste très avantageusement en l'éthanol.

Le non solvant de l'ADN (S2) (solvant ou mélange d'au moins deux solvants (miscibles)) est comme précisé ci-dessus : apolaire, non solvant de l'ADN aux températures précisées, miscible avec le solvant (S1). Il est avantageusement choisi parmi les solvants chlorés et leurs mélanges. Il consiste très avantageusement en le dichlorométhane.

Ainsi, selon une variante très avantageuse, ledit solvant polaire (S1) consiste en l'éthanol et/ou, avantageusement et, ledit solvant apolaire (S2) consiste en le dichlorométhane.

Selon une variante particulièrement préférée, le procédé de l'invention est mis en oeuvre avec l'éthanol comme solvant polaire (S1), le dichlorométhane comme non solvant apolaire (S2) et au moins un tensio-actif non ionique présentant une balance hydrophile/hydrophobe inférieure à 6 (HLB < 6) dans la solution S (= ADN + S1 + ledit au moins un tensio-actif ; ledit au moins un tensio-actif étant avantageusement présent en les taux précisés ci-dessus).

Le procédé de l'invention, tel que décrit ci-dessus, conduit donc à des cristaux d'ADN de morphologie intéressante (« cristaux arrondis »). La granulométrie desdits cristaux peut par ailleurs être contrôlée *via* les paramétres de mise en oeuvre dudit procédé identifiés ci-dessus (différence des températures de la solution d'ADN et du non solvant éventuellement additionné d'au moins un tensio-actif et différence des concentrations en ADN initiale et finale). L'intérêt dudit procédé ressort à l'évidence des propos ci-dessus. Il est confirmé par la partie exemple ci-après.

Les cristaux d'ADN obtenus par le procédé de l'invention, tel que décrit ci-dessus, portent signature dudit procédé.

Cette signature consiste en des traces (quelques ppm, décelables et quantifiables par HPLC (« High Pressure Liquid Chromatography »), ne constituant pas une pollution de par leur faible teneur) du au moins un tensio-actif non ionique utilisé au cours de la préparation desdits cristaux. A propos dudit au moins un tensio-actif non ionique, on rappelle ce qui a été dit ci-dessus et notamment qu'il présente avantageusement une balance hydrophile/hydrophobe inférieure à 6 (HLB < 6), qu'il consiste très avantageusement en le monostéarate de sorbitane (E 491).

Les cristaux d'ADN, tels qu'obtenus par le procédé décrit ci-dessus, peuvent être être formulés dans des composites énergétiques, renfermant des charges énergétiques dans un liant, énergétique ou non, au moins une partie desdites charges énergétiques consistant en lesdits cristaux d'ADN.

Lesdits composites peuvent renfermer une forte teneur en lesdits cristaux, du fait de la morphologie arrondie de ceux-ci. On peut indiquer, de façon nullement limitative, qu'ils sont tout à fait susceptibles d'en renfermer plus de 50 %, voire plus de 70 %, et voire même jusqu'à environ 90 % (% en masse).

On se propose maintenant d'illustrer, de façon nullement limitative, le contexte de l'invention et l'invention elle-même, par les figures annexées, les exemples et exemples comparatifs ci-après.

La figure A (photographie) illustre l'art antérieur. Elle montre, au microscope électronique à balayage, des cristaux d'ADN bruts disponibles auprès de la société Eurenco-Bofors (SE).

La figure B (photographie) illustre également l'art antérieur. Elle montre, également au microscope électronique à balayage, de l'ADN prillé.

Les figures (1+2)A et (1+2)B (photographies) montrent, respectivement, au microscope optique et au microscope électronique à balayage, les cristaux d'ADN obtenus selon le procédé de l'invention, dans les conditions des exemples 1 et 2 ci-après. Elles montrent plus précisément un mélange de cristaux obtenus dans les conditions de l'exemple 1 et de cristaux obtenus dans les conditions de l'exemple 2 (voir ci-après). Ce mélange est homogène. Les cristaux présentent des tailles similaires.

La figure 3A (photographie) montre, au microscope optique, les cristaux d'ADN obtenus selon le procédé de l'invention, dans les conditions de l'exemple 3 ci-après.

Les figures 4A et 4B (photographies) montrent respectivement, au microscope optique et au microscope électronique à balayage, les cristaux d'ADN obtenus selon le procédé de l'invention, dans les conditions de l'exemple 4 ci-après.

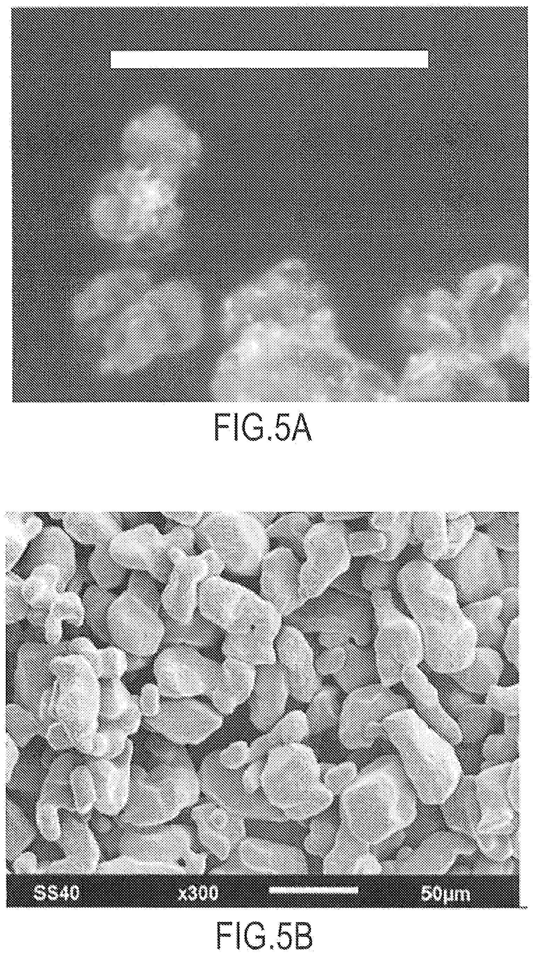

Les figures 5A et 5B (photographies) montrent respectivement, au microscope optique et au microscope électronique à balayage, les cristaux d'ADN obtenus selon le procédé de l'invention, dans les conditions de l'exemple 5 ci-après.

Les figures 6A et 6B (photographies) montrent respectivement, au microscope optique et au microscope électronique à balayage, les cristaux d'ADN obtenus selon le procédé de l'invention, dans les conditions de l'exemple 6 ci-après.

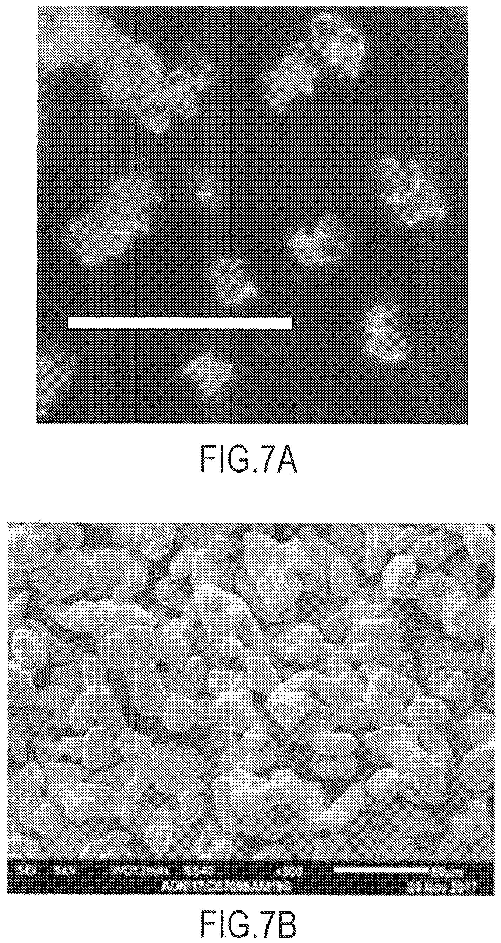

Les figures 7A et 7B (photographies) montrent respectivement, au microscope optique et au microscope électronique à balayage, les cristaux d'ADN obtenus selon le procédé de l'invention, dans les conditions de l'exemple 7 ci-après.

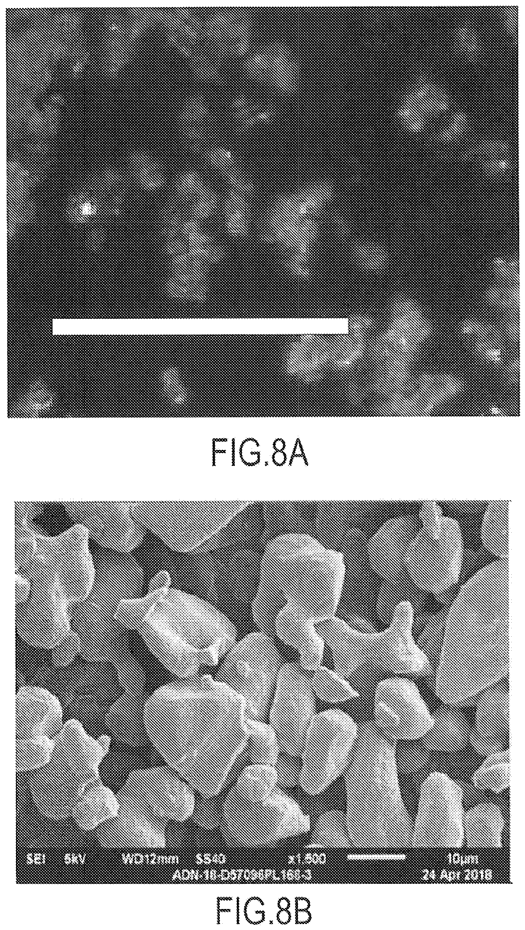

Les figures 8A et 8B (photographies) ainsi que 9A et 9B (photographies) montrent, au microscope optique pour les figures 8A et 9A, et au microscope électronique à balayage pour les figures 8B et 9B, les cristaux d'ADN obtenus selon le procédé de l'invention, respectivement dans les conditions des exemples 8 et 9 ci-après.

La figure C1A (photographie) n'illustre pas l'invention. Elle montre au microscope optique les cristaux d'ADN obtenus dans les conditions de l'exemple comparatif C1 ci-après.

La figure C2A (photographie) n'illustre pas l'invention. Elle montre au microscope optique les cristaux d'ADN obtenus dans les conditions de l'exemple comparatif C2 ci-après.

La figure C3A (photographie) n'illustre pas l'invention. Elle montre au microscope optique les cristaux d'ADN obtenus dans les conditions de l'exemple comparatif C3 ci-après.

Les figures C4A, C5A et C6A (photographies) n'illustrent pas l'invention. Elles montrent au microscope optique les cristaux d'ADN obtenus dans les conditions des exemples comparatifs C4, C5 et C6 ci-après.

La ligne montrée sur les photographies au microscope optique correspond à 91 µm. Sur les photographies au microscope électronique à balayage (MEB), l'échelle est indiquée. On comprend que les photographies au MEB ont été plus généralement réalisées pour les cristaux des exemples ne montrant, au microscope optique, ni plaques, ni bâtonnets, ni aiguilles.

En référence aux figures A et B, illustrant l'art antérieur, on peut ajouter ce qui suit.

Le thermogramme de l'ADN de la figure A (ADN brut commercial) a confirmé sa pureté (température de fusion de 93,62°C et température de décomposition de 179,81°C). Pour ce qui concerne les cristaux, on a mesuré :
- une surface spécifique de 0,499 m²/g ;
- un D₅₀ de 100 µm ; et
- un facteur de forme calculé de 0,07 << 1. Ce faible facteur de forme confirme la morphologie observée (la présence de plaques).

Les cristaux d'ADN (« prills ») de la figure B ont été obtenus selon la méthode dite de cristallisation en voie fondue dans les conditions précisées ci-après. Un mélange PBHT (polymère)/DOZ (plastifiant) en un ratio massique 37/63 (%) a été préchauffé à 92°C dans un réacteur, avant que 720 g d'ADN soient introduits, à cette température (dans ledit réacteur). On a observé, dans ces conditions, la fusion de l'ADN et la création d'une émulsion d'ADN (liquide) dans le mélange PBHT/DOZ. La température a été portée jusqu'à 96°C puis abaissée jusqu'à 23°C selon une rampe de refroidissement d'environ 3,5°C/min. Lors de l'abaissement de température, l'ADN a cristallisé sous forme de goutelettes. Le milieu a ensuite été décanté, et le liquide surnageant éliminé. Le solide récupéré (ADN) a été lavé par 4 lavages successifs avec à chaque fois 2 L d'heptane. A l'issue de chaque lavage, l'ADN récupéré a été filtré, puis à l'issue du dernier lavage, filtré puis séché 48 h à 30°C en étuve sous vide. Les cristaux obtenus présentaient :
- une surface spécifique de 0,259 m²/g ;
- un D₅₀ de 22 µm ; et
- un facteur de forme calculé de 0,58. Ce facteur de forme confirme la morphologie observée (« prills » ou granulés sphériques).
- un pourcentage de DOZ résiduel (restant après lavage) (évalué par HPLC) de 0,1 % en masse.

Pour ce qui concerne les autres figures, elles sont commentées dans le cadre des exemples ci-après.

### EXEMPLES

Dans le tableau ci-après (réparti sur 4 pages), on a indiqué les conditions de mise en œuvre du procédé de l'invention selon 9 variantes (exemples 1 à 9), ainsi que des conditions de mise en œuvre selon des variantes non conformes à l'invention (exemples comparatifs C1 à C6).

On a plus précisément indiqué :
1) les caractéristiques de solutions S préparées (masse d'ADN en solution (ADN (g)), masse de solvant polaire S1 (S1 (g)), masse de tensio-actif (TA (g)), température (TS (°C)) et rapport massique ADN/S1 (%)) ;
2) les caractéristiques de solvants apolaires S2 utilisés (masse du solvant S2 (S2 (g)) et température de celui-ci (TS2 (°C))) ;
3) des caractéristiques des mélanges S + S2 (rapport massique S1/(S1 + S2) (%) et concentration en ADN (% massique)).

Dans ledit tableau, on a aussi indiqué des résultats (masse de cristaux récupérée (ADN récupéré (g)), rendement (= masse de cristaux récupérée (g)/masse d'ADN en solution dans S1 (g)), morphologie des cristaux récupérés (cristaux observés par une caméra placée sur un microscope optique, à considérer avec les figures correspondantes (plus particulièrement les photographies au microscope optique (figures (1+2)A à C6A))), surface spécifique (BET (m²/g), facteur de forme F et D₅₀ (µm)).

Dans tous les exemples et exemples comparatifs, on a utilisé l'éthanol comme solvant polaire S1.

Dans tous les exemples et exemples comparatifs, à l'exception toutefois de l'exemple comparatif C4, on a utilisé le dichlorométhane comme solvant apolaire S2. Dans ledit exemple comparatif C4, l'heptane, seul, a été utilisé.

Pour tous les exemples et exemples comparatifs, à l'exception toutefois des exemples comparatifs C5 et C6, la composition S comprenait un tensio-actif (TA) convenable (convenable dans les contextes précisés du tensio-actif présent dans S, avec S1 = l'éthanol et S2 = le dichlorométhane). Il s'agissait du Span^{®}60, tensio-actif non ionique (monostéarate de sorbitane (E 491)), présentant une balance hydrophile/hydrophobe de 4,7 (HLB < 6). Dans l'exemple comparatif C5, du Span^{®}20 (tensioactif non ionique, monolaurate de sorbitane, HLB = 8,6 > 6) a été utilisé en lieu et place du Span^{®}60. Dans l'exemple comparatif C6, aucun tensio-actif n'a été utilisé.

Les exemples comparatifs C1 et C2 illustrent des conditions où le rapport massique S1/(S1+S2) est trop important et l'exemple comparatif C3 illustre des conditions où la solution S ne renferme pas assez d'ADN.

Les modes opératoires suivis ont été tels que précisés ci-après :
- à l'échelle de 10-20 g (tous les exemples sauf les exemples 6 et 7) : la solution S (ADN + S1 + TA) a été réalisée en bain-marie, dans un bécher, avec une agitation mécanique (200 tr/min), à la température TS indiquée. Ladite solution S a été coulée (versée *via* un entonnoir), en 1 min dans S2 (débit de 3 L/min), préalablement conditionné dans un ballon tricol de 500 mL, agité à 200 tr/min (agitation magnétique) et thermostaté à la température TS2 indiquée. Le temps de contact S + S2 a été de 10 min ; et
- à l'échelle de 100 g (exemples 6 et 7) : la solution S (ADN + S1 + TA) a été réalisée dans un réacteur double-enveloppe de 1 L, avec une agitation mécanique (200 tr/min), à la température TS (55°C) indiquée. Ladite solution S a été introduite (à un débit de 12 L/h) dans un réacteur double-enveloppe de 3 L contenant S2, thermostaté à la température TS2 (20°C), agité (mécaniquement) comme précisé dans lesdits exemples 6 et 7.

| | **Exemples** | **1** | **2** | **3** | **4** |
|---|---|---|---|---|---|
| **S** | ADN (g) | 11 | 10,8 | 11,09 | 20,04 |
| | S1 (g) | 31 | 30,7 | 31,81 | 43,48 |
| | TA (g) | 1,5 | 1,6 | 1,5 | 1,97 |
| | TS (°C) | 52 | 52 | 50 | 55 |
| | **ADN/S1** | **35%** | **35%** | **35%** | **46** % |
| **S2** | 52 (g) | 276 | 276 | 274 | 395,21 |
| | T52 (°C) | 0 | 0 | 20 | 17 |
| **S+S2** | **S1/(S1+S2)** | **10,1** % | **10%** | **10,4** % | **9,9%** |
| | ADN (% massique) | 3,4 % | 3,4% | 3,5 % | 4,3 % |
| | ADN récupéré (g) | 9,3 | 9,4 | Non mesuré | 16,50 |
| | Rendement (%) | 85 | 87 | | 82 |
| | Morphologie (observée au microscope optique) | cristaux arrondis | cristaux arrondis | cristaux arrondis | cristaux arrondis |
| | BET (m²/g) | | | | 0,458 |
| | F | | | | 0,42 |
| | D₅₀(µm) | 15 | | 30 | 17,2 |

| | **Exemples** | **5** | **6** | **7** | **C1** | **C2** | **C3** |
|---|---|---|---|---|---|---|---|
| **S** | ADN (g) | 20,0 | 100 | 100 | 11,09 | 10 | 10,0 |
| | S1 (g) | 74,2 | 371,3 | 371,3 | 31,81 | 31,8 | 78,23 |
| | TA (g) | 2,0 | 9,8 | 9,8 | 1,06 | 1 | 1,3 |
| | TS (°C) | 50 | 50 | 50 | 50 | 50 | 50 |
| | **ADN/S1** | **27%** | **27%** | **27%** | **31%** | **31%** | **13 %** |
| **S2** | 52 (g) | 401 | 2007 | 2007 | 100 | 90 | 269 |
| | T52 (°C) | 20 | 20 | 5 | 20 | 20 | 20 |
| **S+S2** | **S1/(S1+S2)** | **15,6 %** | **15,6 %** | **15,6 %** | **32,4 %** | **26,1%** | **22,5 %** |
| | ADN (% massique) | 4,0% | 4,0% | 4,0% | 9,2 % | 7,5 % | 2,8% |
| | ADN récupéré (g) | 13,0 | 56 | 63 | Non mesuré | 4,7 | Non mesuré |
| | Rendement (%) | 65 | 56 | 63 | | 47 | |
| | Morphologie (observée au microscope optique) | Cristaux arrondis | Cristaux arrondis | Cristaux arrondis | non correcte : présence de plaques | non correcte : présence de plaques | non correcte : présence de plaques |
| | BET (m²/g) | | | | | | |
| | F | | | | | | |
| | D₅₀(µm) | 44 | 54,8 | 31,7 | | | |

| | **Exemples** | **8** | **9** |
|---|---|---|---|
| **S** | ADN (g) | 11 | 11 |
| | S1 (g) | 34,3 | 34,3 |
| | TA (g) | 1,5 | 1,5 |
| | TS (°C) | 55 | 55 |
| | **ADN/S1** | **32** % | **32** % |
| **S2** | 52 (g) | 278 | 278 |
| | T52 (°C) | 20 | 20 |
| **S+S2** | **S1/(S1+S2)** | **11,0 %** | **11,0 %** |
| | ADN (% massique) | 3,4 % | 3,4 % |
| | ADN récupéré (g) | 8 | 7,3 |
| | Rendement (%) | 72 | 66 |
| | Morphologie (observée au microscope optique) | Cristaux arrondis | correcte : présence de quelques plaques |
| | D₅₀(µm) | 21 | 21 |

| | **Exemples** | **C4 (S2 = heptane)** | **C5 (TA** = **SPAN^{®}20)** | **C6 (sans TA)** |
|---|---|---|---|---|
| **S** | ADN (g) | 12,3 | 20,05 | 10 |
| | S1 (g) | 45,75 | 74,68 | 22,5 |
| | TA (g) | 1,26 | 2,23 SPAN 20 | 0 |
| | TS (°C) | 50 | 50 | 50 |
| | **ADN/S1** | **27 %** | **27 %** | **44 %** |
| **S2** | 52 (g) | 245 | 401,2 | 199,5 |
| | T52 (°C) | 20 | 20 | 20 |
| **S+S2** | **S1/(S1+S2)** | **15,7%** | **15,7%** | **10,1**% |
| | ADN (% massique) | 4,0% | 4,0% | 4,3 % |
| | ADN récupéré (g) | 9,8 | 12,23 | 6,9 |
| | Rendement (%) | 80 | 61 | 69 |
| | Morphologie (observée au microscope optique) | non correcte : présence d'aiguilles | non correcte : présence de plaques | Non correcte : présence de plaques |

A propos de chacun desdits exemples et exemple comparatifs, on ajoute opportunément les commentaires ci-après.

Les exemples 1 et 2 ont été mis en oeuvre dans des conditions quasi identiques (ADN/S1 (rapport massique) = 35 % ; S1/(S1 + S2) (rapport massique) ≈ 10 % ; TS -TS2 = 52°C). Les résultats obtenus étaient quasi identiques (observation par la caméra placée sur le microscope optique) : il a ainsi été vérifié que le procédé de l'invention est reproductible. Lesdits résultats étaient très satisfaisants : de petits cristaux arrondis ont été obtenus. En fait, les cristaux obtenus aux exemples 1 et 2 ont été mélangés et les photographies montrées aux figures (1+2)A et (1+2)B sont des photographies du mélange (« homogène »).

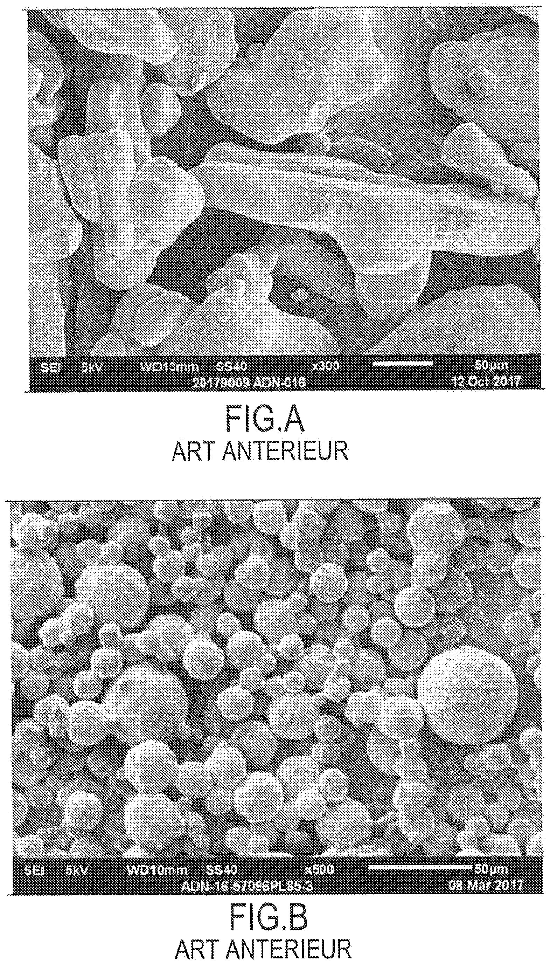

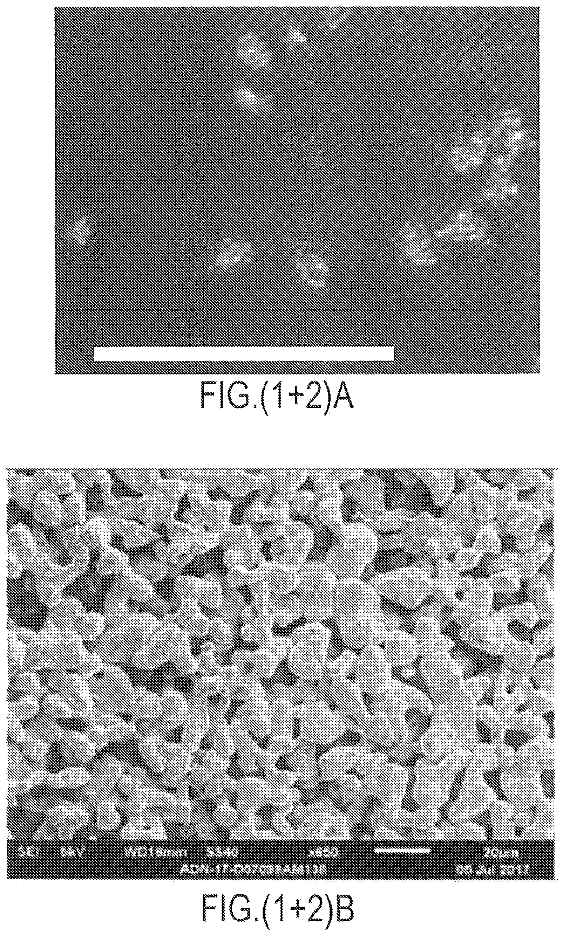

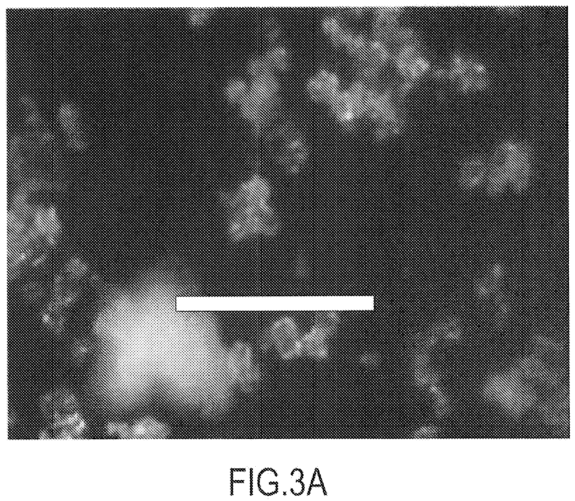

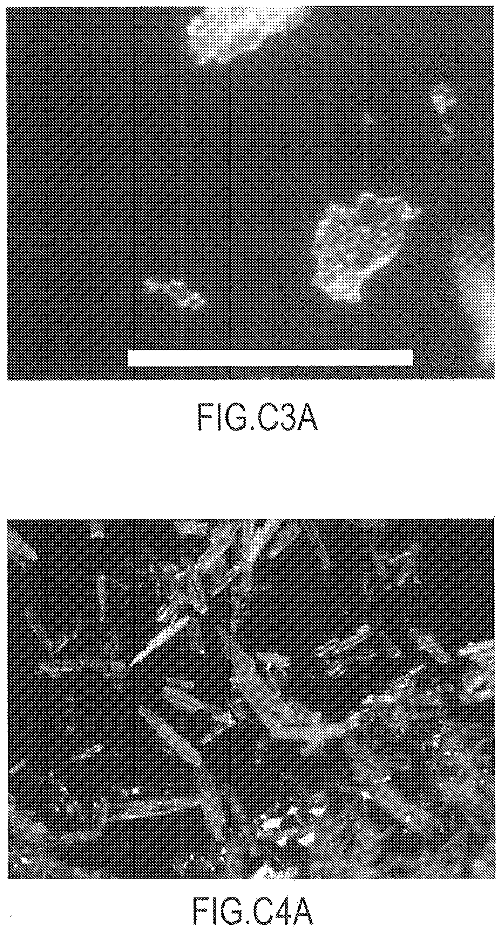

Pour la mise en œuvre de l'exemple 3, on a repris les produits (ADN, S1, TA, et S2) dans sensiblement les mêmes quantités, en conservant sensiblement une même différence des concentrations initiale et finale, mais on a réduit l'écart de température entre S et S2 (de 52°C (52 - 0), il a été passé à 30°C (50 - 20)). Les cristaux obtenus présentaient toujours une morphologie intéressante (arrondie) (voir la figure 3A) mais une granulométrie plus grosse. On a ainsi confirmé que la différence des températures est un levier d'action sur la granulométrie (plus ladite différence de température est importante, plus la granulométrie est faible).

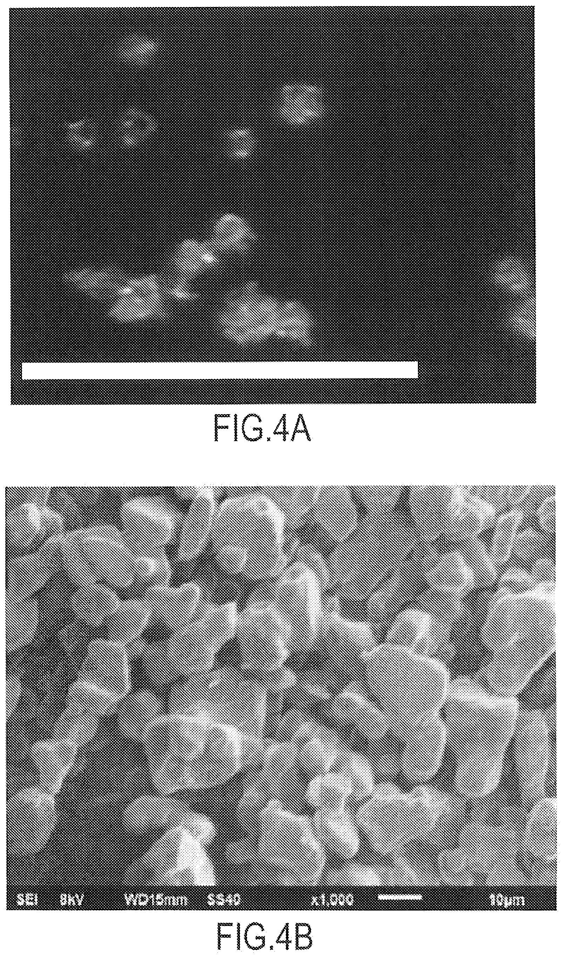

Pour la mise en œuvre de l'exemple 4, on a utilisé une solution S plus concentrée en ADN (ADN/S1 (rapport massique) = 46 %). Le résultat obtenu a été particulièrement intéressant. Avec un bon rendement (de 82 %), des cristaux arrondis, fins (D₅₀ = 17,2 µm) (plus fins (plus petits) que ceux de l'exemple 3, car la différence des concentrations initiale et finale est plus élevée pour l'exemple 4 (41,7 % (ex. 4) > 31,5 % (ex. 3)) ; la différence des températures, analogue (30°C (ex. 3)/28°C (ex. 4)), étant trop faible pour avoir un impact significatif) ont été obtenus (voir les figures 4A et 4B).

Pour la mise en œuvre de l'exemple 5, on a diminué le taux d'ADN dans l'éthanol (ADN/S1 : 27 % (ex. 5)/46 % (ex. 4)) et augmenté le taux d'éthanol dans le dichlorométhane (S1/(S1+S2) : 15,6 % (ex. 5) / 9,9 % (ex. 4)). On a ainsi diminué la différence des concentrations initiale et finale de 41,7 % (ex. 4) à 23 % (ex. 5), en conservant une différence des températures analogue (30°C (ex. 5)/28°C (ex. 4)). Le but était de confirmer l'effet sur la granulométrie des cristaux préparés. La morphologie des cristaux obtenus dans le cadre de la mise en œuvre de cet exemple 5 était identique à celle des cristaux obtenus dans le cadre de la mise en œuvre de l'exemple 4 (cristaux arrondis dans les deux cas). Par contre, les cristaux obtenus dans le cadre de la mise en oeuvre de cet exemple 5 (D₅₀ = 44 µm) étaient plus gros que ceux obtenus dans le cadre la mise en œuvre de l'exemple 4 (D₅₀ = 17,2 µm), du fait donc de l'écart de concentration initiale et finale moins grand dans l'exemple 5. Le rendement était par ailleurs moins intéressant (65 % (ex.5) au lieu de 82 % (ex.4)). On peut comprendre cet effet négatif sur le rendement : l'augmentation du taux de S1 dans S1/(S1+S2) (du taux d'éthanol dans la solution finale) conduit à augmenter la solubilité de l'ADN dans ladite solution finale. A toutes fins utiles, on a par ailleurs mesuré, par thermogravimétrie, les températures de fusion et de décomposition de l'ADN cristallisé dans les conditions de l'exemple 5. Les valeurs obtenues, 93,9°C pour la température de fusion et 182°C pour la température de décomposition, (valeurs qui peuvent être comparées avec celles mesurées, dans les mêmes conditions, pour l'ADN brut commercial) ont confirmé la pureté dudit ADN.

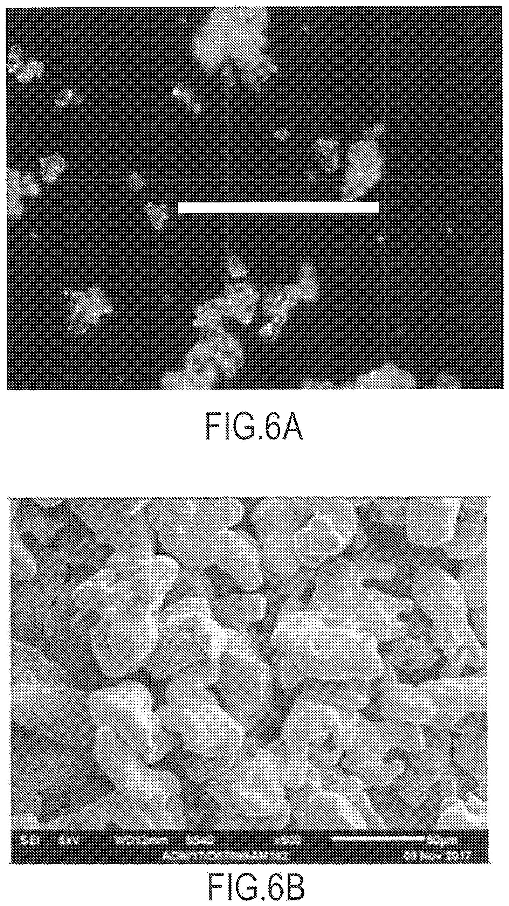

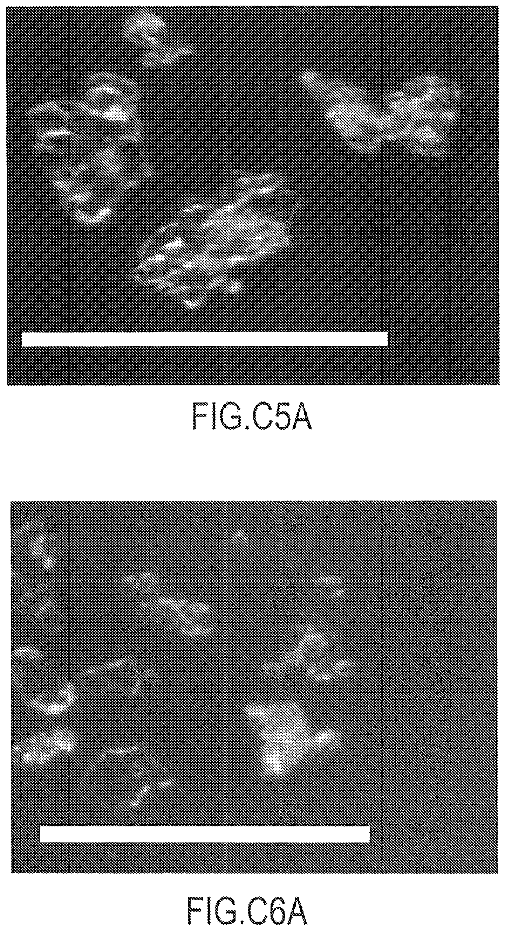

Pour la mise en œuvre des exemples 6 et 7, on a travaillé avec des quantités de produit plus importantes (100 g d'ADN). Les résultats des exemples 6 et 7, tout particulièrement ceux de l'exemple 6 (à différence de température d'égale amplitude (30°C) par rapport à l'exemple 5), ont tout à fait confirmé ceux de l'exemple 5. Les morphologies des cristaux obtenus sont arrondies. Le changement d'échelle : x 5 (100 g ADN pour les exemples 6 et 7/20 g pour l'exemple 5) n'a pas eu d'impact négatif sur les résultats. Pour ce qui concerne l'écart de température entre S et S2 (30°C pour l'exemple 6 (idem pour l'exemple 5) et 45°C pour l'exemple 7), les exemples 6 et 7 ont confirmé son effet (l'effet de son amplitude) sur la granulométrie de l'ADN récupéré (sur la taille des cristaux) : voir les figures 6A et 6B (exemple 6 : cristaux plus gros) et 7A et 7B (exemple 7 : cristaux plus petits). Plus la différence de température est importante, plus la granulométrie est faible. Pour les mises en œuvre des exemples comparatifs C1 et C2, on a essentiellement fait varier les quantités de S1 et S2 en cause, plus exactement la valeur du rapport massique S1/(S1+S2) : 32,4 % pour l'exemple C1 et 26,1 % pour l'exemple comparatif C2. La qualité de la morphologie des cristaux obtenus a été impactée par ces valeurs du rapport massique S1/(S1+S2) trop élevées. Les cristaux obtenus ne présentaient pas la morphologie recherchée. Sur les figures C1A et C2A, on observe très nettement la présence de plaques. On a ainsi montré qu'en l'absence d'un taux suffisant de S2, la morphologie des cristaux n'est pas acceptable.

Pour la mise en œuvre de l'exemple comparatif C3, la concentration en ADN dans S (dans S1) était trop faible. Le rapport massique ADN/S1 était trop faible (13 % < 15 %). On voit clairement des plaques sur la figure C3A.

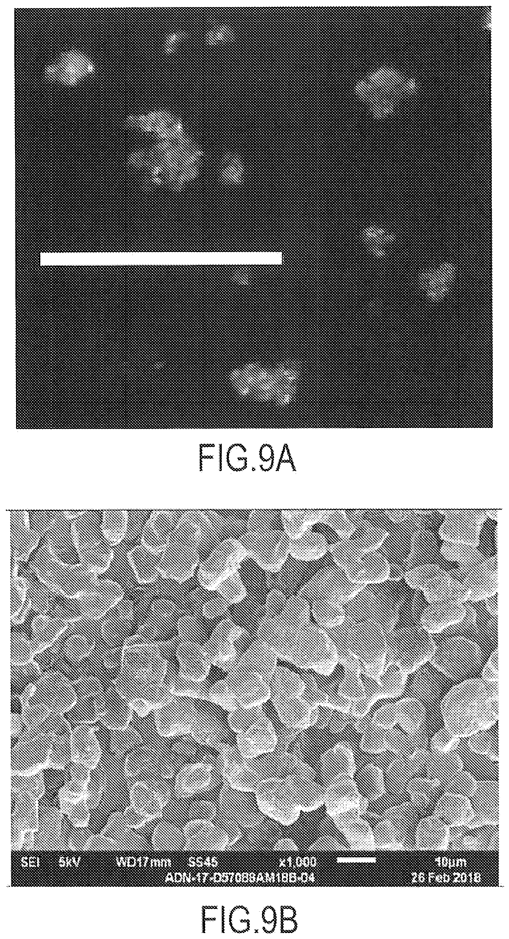

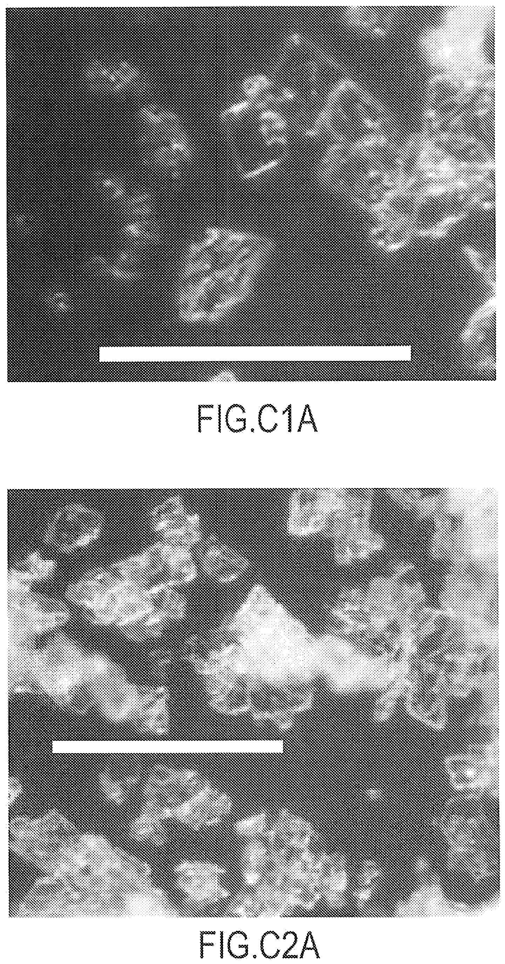

Exemples 8 et 9 : on a mis en oeuvre le procédé de l'invention dans des conditions intermédiaires entre celles de l'exemple 3 et celles de l'exemple 5 (voir les valeurs indiquées), en ne faisant varier que la vitesse d'agitation lors de l'addition de S dans S2 : agitation de 200 tours/min dans l'exemple 8 et de 400 tours/min dans l'exemple 9. La vitesse d'agitation n'est pas apparue comme un paramètre de premier ordre. Elle n'a pas d'effet sur la granulométrie (D₅₀ de 21 µm dans les deux cas) ; elle a un effet de faible intensité sur le rendement et également un effet de faible intensité sur la morphologie des cristaux (on a en effet observé quelques plaques sur la figure 9B). L'homme du métier conçoit aisément qu'une plus forte agitation est opportune lorsque la concentration en ADN est plus élevée.

Exemple comparatif C4 : le procédé a été mis en œuvre dans des conditions analogues à celles de l'exemple 5 ci-dessus (voir les valeurs analogues pour les rapports massiques ADN/S1 et S1/(S1+S2)). L'heptane a toutefois été employé en lieu et place du dichlorométhane. Les résultats obtenus n'étaient pas satisfaisants. On a constaté la présence de nombreux cristaux en forme d'aiguilles (figure C4A). L'heptane utilisé comme unique solvant apolaire S2 dans les conditions précisées ne convient donc pas dans lesdites conditions analogues à celles dudit l'exemple 5. On ne saurait exclure qu'il convienne dans d'autres conditions et/ou en mélange avec au moins un autre non solvant S2.

Exemple comparatif C5 : le procédé a également été mis en œuvre dans des conditions analogues à celles de l'exemple 5 ci-dessus (voir les valeurs analogues pour les rapports massiques ADN/S1 et S1/(S1+S2)). En lieu et place du tensio-actif Span^{®}60, on a utilisé le tensio-actif Span^{®}20 (HLB = 8,6 (> 6)). Le résultat obtenu, dans les conditions précisées, n'était pas satisfaisant : on a observé de nombreuses plaques (voir la figure C5A).

Exemple comparatif C6 : le procédé a été mis en œuvre dans des conditions analogues à celles de l'exemple 4 ci-dessus (voir les valeurs analogues pour les rapports massiques ADN/S1 et S1/(S1+S2)) mais en l'absence de tensio-actif. La figure C6A montre la présence de nombreuses plaques.

## Revendications

1. Procédé d'obtention de cristaux de dinitroamidure d'ammonium, ADN, comprenant :
- la mise à disposition, à une température (TS) comprise entre la température ambiante et 65°C, d'une solution d'ADN (S) dans un solvant polaire (S1) de l'ADN ; ladite solution d'ADN (S), constituée essentiellement dudit ADN, dudit solvant polaire (S1) de l'ADN et éventuellement d'au moins un tensio-actif non ionique, renfermant l'ADN en un rapport massique, ADN/solvant polaire (S1), d'au moins 15 % ;
- la mise à disposition, à une température (TS2) inférieure à ladite température (TS) de ladite solution d'ADN (S), d'un solvant apolaire (S2) non solvant de l'ADN, miscible avec ledit solvant polaire (S1) solvant de l'ADN et éventuellement additionné d'au moins un tensio-actif non ionique ;
- l'addition, avec agitation, d'au moins une partie de ladite solution d'ADN (S) dans au moins une partie dudit solvant apolaire (S2) éventuellement additionné d'au moins un tensio-actif non ionique, ladite au moins une partie de ladite solution d'ADN (S) étant additionnée, à ladite au moins une partie dudit solvant apolaire (S2) éventuellement additionné d'au moins un tensio-actif non ionique, au maximum en une quantité correspondant à un rapport massique du solvant polaire (S1)/(solvant polaire (S1) + solvant apolaire (S2)) de 25 %,
étant avantageusement additionnée en une quantité correspondant à un tel rapport massique de 8 à 23 %,
étant très avantageusement additionnée en une quantité correspondant à un tel rapport massique de 9 à 17 %,
pour la constitution d'une émulsion éphémère de gouttelettes de ladite solution d'ADN (S) dans ledit solvant apolaire (S2) éventuellement additionné d'au moins un tensio-actif non ionique ; lesdites gouttelettes, de par l'inter-diffusion des solvants polaire et apolaire (S1 et S2) miscibles, se transformant en les cristaux d'ADN attendus ;
ledit au moins un tensio-actif non ionique étant présent dans ladite solution d'ADN (S) et/ou ayant été additionné dans ledit solvant apolaire (S2), étant avantageusement présent dans ladite solution d'ADN (S), en une quantité efficace pour la contitution de ladite émulsion éphémère ;
- la récupération desdits cristaux, et généralement
- le séchage desdits cristaux récupérés.

2. Procédé selon la revendication 1, **caractérisé en ce que** ladite solution d'ADN (S) est préparée par dissolution d'ADN solide dans le solvant polaire (S1).

3. Procédé selon la revendication 1 ou 2, **caractérisé en ce que** ladite solution d'ADN (S) est une solution (quasi)saturée en ADN.

4. Procédé selon l'une quelconque des revendications 1 à 3, **caractérisé en ce que** la température (TS2) du solvant apolaire (S2) éventuellement additionné d'au moins un tensio-actif non ionique est inférieure, de 20 à 50°C, à la température (TS) de la solution d'ADN (S) ; **en ce qu'**avantageusement, ladite température (TS2) du solvant apolaire (S2) éventuellement additionné d'au moins un tensio-actif non ionique est inférieure, de 15 à 45°C, à la température (TS) de la solution d'ADN (S).

5. Procédé selon l'une quelconque des revendications 1 à 4, **caractérisé en ce que** l'addition de ladite au moins une partie de ladite solution d'ADN (S) dans ledit solvant apolaire (S2) éventuellement additionné d'au moins un tensio-actif non ionique est mise en oeuvre par coulée.

6. Procédé selon l'une quelconque des revendications 1 à 5, **caractérisé en ce que** ledit au moins un tensio-actif non ionique est un tensio-actif non ionique présentant une balance hydrophile/hydrophobe inférieure à 6 (HLB < 6).

7. Procédé selon l'une quelconque des revendications 1 à 6, **caractérisé en ce que** ledit au moins un tensio-actif non ionique est présent dans ladite solution d'ADN (S) en un rapport massique, dudit au moins un tensio-actif/solvant polaire (S1), de 0,05 à 5 %, avantageusement de 0,06 à 3 %, très avantageusement de 0,08 à 2 %.

8. Procédé selon l'une quelconque des revendications 1 à 7, **caractérisé en ce que** le solvant polaire (S1) est choisi parmi l'éthanol, les propanols et leurs mélanges.

9. Procédé selon l'une quelconque des revendications 1 à 8, **caractérisé en ce que** ledit solvant apolaire (S2) consiste en un solvant chloré ou un mélange d'au moins deux solvants chlorés.

10. Procédé selon l'une quelconque des revendications 1 à 9, **caractérisé en ce que** ledit solvant polaire (S1) consiste en l'éthanol et/ou, avantageusement et, ledit solvant apolaire (S2) consiste en le dichlorométhane.

## Patentansprüche

1. Verfahren zur Herstellung von Kristallen von Amonium-dinitroamid (ADN), umfassend:
- die Bereitstellung einer ADN-Lösung (S) in einem polaren Lösungsmittel (S1) des ADN bei einer Temperatur (TS) zwischen Raumtemperatur und 65°C, wobei die ADN-Lösung (S) im Wesentlichen aus dem ADN, dem polaren Lösungsmittel (S1) des ADN und gegebenenfalls mindestens einem nichtionischen Tensid besteht, und der ADN in einem Massenverhältnis von ADN/polarer Lösungsmittel (S1) von mindestens 15 % enhält;
- die Bereitstellung, bei einer Temperatur (TS2) niedrieger als die genannte Temperatur (TS) der ADN-Lösung (S), eines unpolaren Lösungsmittels (S2), das kein Lösungsmittel des ADN ist und mit dem polaren Lösungsmittel (S1) des ADN mischbar ist, wobei dem Lösungsmittel gegebenenfalls mindestens ein nichtionisches Tensid zugesetzt wird;
- die Zugabe, unter Rühren, von mindestens einem Teil der ADN-Lösung (S) in mindestens einem Teil des unpolaren Lösungsmittels (S2), dem gegebenenfalls mindestens ein nichtionisches Tensid zugesetzt ist, wobei der mindestens ein Teil der ADN-Lösung (S) zu dem mindestens einen Teil des unpolaren Lösungsmittels (S2), dem gegebenenfalls mindestens ein nichtionisches Tensid zugesetzt ist, höchstens in einer Menge zugesetzt wird, die einem Massenverhältnis des polaren Lösungsmittels (S1)/(polares Lösungsmittel (S1) + apolares Lösungsmittel (S2)) von 25 % entspricht, vorteilhaft in einer Menge zugesetzt wird, die einem solchen Massenverhältnis von 8 bis 23 % entspricht, sehr vorteilhaft in einer Menge zugesetzt wird, die einem solchen Massenverhältnis von 9 bis 17 % entspricht,
zur Bildung einer kurzlebigen Emulsion von Tröpfchen der ADN-Lösung (S) in dem unpolaren Lösungsmittel (S2), dem gegebenenfalls mindestens ein nichtionisches Tensid zugesetzt ist; wobei sich die gennanten Tröpfchen aufgrund der Interdiffusion der mischbaren polaren und apolaren Lösungsmittel (S1 und S2) in die erwarteten ADN-Kristalle verwandeln;
wobei das mindestens ein nichtionische Tensid in der ADN-Lösung (S) vorhanden ist und/oder dem apolaren Lösungsmittel (S2) zugesetzt wurde, vorteilhafterweise in der ADN-Lösung (S) in einer Menge vorhanden ist, die für die Bildung der genannten kurzlebigen Emulsion wirksam ist;
- die Rückgewinnung der genannten Kristalle und im Allgemeinen
- die Trocknung der zurückgewonnenen Kristalle.

2. Verfahren nach Anspruch 1, **dadurch gekennzeichnet, dass** die ADN-Lösung (S) durch Auflösen von fester ADN in dem polaren Lösungsmittel (S1) hergestellt wird.

3. Verfahren nach Anspruch 1 oder 2, **dadurch gekennzeichnet, dass** die ADN-Lösung (S) eine (nahezu) gesättigte ADN-Lösung ist.

4. Verfahren nach einem der Ansprüche 1 bis 3, **dadurch gekennzeichnet, dass** die Temperatur (TS2) des apolaren Lösungsmittels (S2), dem gegebenenfalls mindestens ein nichtionisches Tensid zugesetzt ist, 20 bis 50°C unter der Temperatur (TS) der ADN-Lösung (S) liegt; dass vorteilhafterweise die Temperatur (TS2) des apolaren Lösungsmittels (S2), dem gegebenenfalls mindestens ein nichtionisches Tensid zugesetzt ist, 15 bis 45°C unter der Temperatur (TS) der ADN-Lösung (S) liegt.

5. Verfahren nach einem der Ansprüche 1 bis 4, **dadurch gekennzeichnet, dass** die Zugabe des mindestens einen Teils der ADN-Lösung (S) in dem apolaren Lösungsmittel (S2), dem gegebenenfalls mindestens ein nichtionisches Tensid zugesetzt ist, durch Gießen durchgeführt wird.

6. Verfahren nach einem der Ansprüche 1 bis 5, **dadurch gekennzeichnet, dass** das mindestens ein nichtionisches Tensid, ein nichtionisches Tensid mit einem HLB-Wert von weniger als 6 (HLB < 6) ist.

7. Verfahren nach einem der Ansprüche 1 bis 6, **dadurch gekennzeichnet, dass** das mindestens ein nichtionisches Tensid in der ADN-Lösung (S) in einem Massenverhältnis von Tensid/Lösungsmittel (S1) 0,05 bis 5 %, vorteilhaft 0,06 bis 3 %, sehr vorteilhaft 0,08 bis 2 %, vorhanden ist.

8. Verfahren nach einem der Ansprüche 1 bis 7, **dadurch gekennzeichnet, dass** das polare Lösungsmittel (S1) aus Ethanol, Propanolen und deren Mischungen ausgewählt ist.

9. Verfahren nach einem der Ansprüche 1 bis 8, **dadurch gekennzeichnet, dass** das apolare Lösungsmittel (S2) aus einem chlorierten Lösungsmittel oder einem Gemisch aus mindestens zwei chlorierten Lösungsmitteln besteht.

10. Verfahren nach einem der Ansprüche 1 bis 9, **dadurch gekennzeichnet, dass** das polare Lösungsmittel (S1) aus Ethanol besteht und/oder, vorteilhafterweise und, das apolare Lösungsmittel (S2) aus Dichlormethan besteht.

## Claims

1. A method for obtaining crystals of ammonium dinitroamide, ADN, comprising:
- providing, at a temperature (TS) from between room temperature and 65°C, an ADN solution (S) in a polar solvent (S1) for the ADN; said ADN solution (S), consisting essentially of said ADN, of said polar solvent (S1) for the DNA and optionally of at least one nonionic surfactant, containing the ADN in a weight ratio, ADN/polar solvent (S1), of at least 15%;
- providing, at a temperature (TS2) below said temperature (TS) of said ADN solution (S), of a non-polar solvent (S2) which is a non-solvent for the ADN, and is miscible with said polar solvent (S1) for the AND, to which at least one nonionic surfactant has been optionally added;
- adding, with stirring, at least a part of said ADN solution (S) to at least a part of said non-polar solvent (S2) to which at least one nonionic surfactant has been optionally added, said at least a part of said ADN solution (S) being added to said at least a part of said non-polar solvent (S2) to which at least one nonionic surfactant has been optionally added, at most in an amount corresponding to a weight ratio of polar solvent (S1)/(polar solvent (S1) + non-polar solvent (S2)) of 25%, advantageously in an amount corresponding to such a weight ratio of 8 to 23%, very advantageously in an amount corresponding to such a weight ratio of 9 to 17%,
to form an ephemeral emulsion of droplets of said ADN solution (S) in said non-polar solvent (S2) to which at least one nonionic surfactant has been optionally added; said droplets, due to the inter-diffusion of the miscible polar and non-polar solvents (S1 and S2), transforming into the expected ADN crystals;
said at least one nonionic surfactant being present in said ADN solution (S) and/or having been added to said non-polar solvent (S2), advantageously being present in said ADN solution (S), in an amount effective for forming said ephemeral emulsion;
- the recovery of said crystals, and generally
- the drying of said recovered crystals.

2. The method according to Claim 1, **characterized in that** the said ADN solution (S) is prepared by dissolving solid ADN in the polar solvent (S1).

3. The method according to claim 1 or 2, **characterized in that** said ADN solution (S) is a solution (quasi) saturated with ADN.

4. The method according to any one of claims 1 to 3, **characterized in that** the temperature (TS2) of the non-polar solvent (S2) to which at least one nonionic surfactant has been optionally added is lower, by 20 to 50°C, than the temperature (TS) of the ADN solution (S); **in that** advantageously, said temperature (TS2) of the non-polar solvent (S2) to which at least one nonionic surfactant has been optionally added, is lower, by 15 to 45°C, than the temperature (TS) of the solution of ADN (S).

5. The method according to any one of claims 1 to 4, **characterized in that** the addition of the said at least part of the said ADN solution (S) in the said non-polar solvent (S2) to which at least one nonionic surfactant has been optionally added, is carried out by casting.

6. The method according to any one of claims 1 to 5, **characterized in that** said at least one nonionic surfactant is a nonionic surfactant having a hydrophilic/hydrophobic balance of less than 6 (HLB <6).

7. The method according to any one of claims 1 to 6, **characterized in that** said at least one nonionic surfactant is present in said ADN solution (S) in a weight ratio, of said at least one surfactant /polar solvent (S1), of from 0.05 to 5%, advantageously from 0.06 to 3%, very advantageously from 0.08 to 2%.

8. The method according to any one of claims 1 to 7, **characterized in that** the polar solvent (S1) is chosen from ethanol, propanols and mixtures thereof.

9. The method according to any one of claims 1 to 8, **characterized in that** said non-polar solvent (S2) consists of a chlorinated solvent or of a mixture of at least two chlorinated solvents.

10. The method according to any one of claims 1 to 9, **characterized in that** said polar solvent (S1) consists of ethanol and/or, advantageously and, said non-polar solvent (S2) consists of dichloromethane.
